# EUROPÄISCHE PATENTSCHRIFT

(11) **EP 3 988 405 B1**
(45) Veröffentlichungstag und Bekanntmachung des Hinweises auf die Patenterteilung: **06.09.2023**
(21) Anmeldenummer: 21201136.5
(22) Anmeldetag: 06.10.2021
(51) Int. Cl.: B60S 3/04, B08B 13/00

(54) **VERFAHREN ZUR REINIGUNG EINER MOBILEN NUTZEINHEIT**
METHOD FOR CLEANING A MOBILE UTILITY UNIT
PROCÉDÉ DE NETTOYAGE D'UNE UNITÉ UTILE MOBILE

(30) Priorität: 21.10.2020 DE 102020127731
(43) Veröffentlichungstag der Anmeldung: 27.04.2022
(73) Patentinhaber: Deere & Company, Moline, IL 61265 (US)
(72) Erfinder: FRITZ, NORBERT, 68163 Mannheim (DE); Kremmer, Martin, 68163 Mannheim (DE)
(74) Vertreter: Dehnhardt, Florian Christopher

(56) Entgegenhaltungen:
- US-A1- 2017 121 019

## Beschreibung

Die Erfindung betrifft ein Verfahren zur Reinigung einer mobilen Nutzeinheit.

Mobile Nutzeinheiten, wie z.B. land- oder forstwirtschaftliche Maschinen, werden üblicherweise in definierten Zeitintervallen gewartet. Als Wartungsmaßnahme wird vielfach auch eine Reinigung der Oberfläche der Nutzeinheit von Verschmutzung und dergleichen durchgeführt.

Die US 2017/121019 A1 beschreibt ein Verfahren zur Reinigung eines Fahrzeugs,wonach ein Flächenbereich des Fahrzeugs zur Reinigung ausgewählt wird.

Der vorliegenden Erfindung liegt die Aufgabe zugrunde, eine Reinigung für eine mobile Nutzeinheit effizient durchzuführen. Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Das Verfahren gemäß Patentanspruch 1 dient einer Reinigung einer mobilen Nutzeinheit. Die Reinigung soll die Nutzeinheit insbesondere von Verschmutzungen befreien. Diese entstehen beispielsweise durch landwirtschaftliche Arbeitseinsätze der Nutzeinheit. Bei diesem Verfahren wird ein Flächenbereich der Nutzeinheit ausgewählt, der gereinigt werden soll. Während der Reinigung des ausgewählten Flächenbereiches werden aktuelle Zustandsdaten generiert, welche einen aktuellen Reinigungszustand dieses Flächenbereiches repräsentieren. Die aktuellen Zustandsdaten werden mit bereitgestellten Vergleichsdaten verglichen. In Abhängigkeit von einem Ergebnis des Vergleiches wird die Reinigung des aktuell ausgewählten Flächenbereiches beendet und ein anderer oder nächster Flächenbereich der Nutzeinheit zur Reinigung ausgewählt.

Die vorgenannten Verfahrensschritte ermöglichen eine einfache Verfahrensstruktur, welche mit geringem datentechnischen Aufwand eine effiziente Reinigung der Nutzeinheit bietet. Außerdem erlauben die vorgenannten Verfahrensschritte eine technisch einfache Automatisierung der Reinigung. Somit ist mit dem Verfahren eine effiziente Reinigung der Nutzeinheit möglich. Das Heranziehen des Vergleichsergebnisses eines Datenvergleiches für die Entscheidung, ob ein anderer bzw. nächster Flächenbereich zur Reinigung ausgewählt wird, unterstützt einen zeitsparenden Reinigungsvorgang zur Erzielung eines gewünschten Reinigungsergebnisses. Außerdem unterstützt die Berücksichtigung des Vergleichsergebnisses einen sparsamen Einsatz des verwendeten Reinigungsmediums. Durch die automatisierte Reinigung kann herangezogenes Wartungspersonal entsprechend entlastet werden.

Die Auswahl eines anderen Flächenbereiches zur Reinigung in Abhängigkeit von dem Vergleichsergebnis bedeutet, dass bei bestimmten qualitativen und/oder quantitativen Vergleichsergebnissen der aktuell ausgewählte Flächenbereich weiter gereinigt wird. Andere qualitative und/oder quantitative Vergleichsergebnisse hingegen entsprechen einem gewünschten Reinigungsergebnis für den ausgewählten Flächenbereich, so dass ein anderer bzw. ein nächster Flächenbereich zur Reinigung ausgewählt wird.

Der Reinigungsvorgang an einem Flächenbereich wird vorzugsweise unterbrochen, wenn aktuelle Zustandsdaten dieses Flächenbereiches (z.B. mittels einer optischen Sensorik) generiert werden.

Abhängig von einem Vergleichsergebnis wird derselbe Flächenbereich weiter gereinigt, so dass weitere aktuelle Zustandsdaten desselben Flächenbereiches generiert werden. Vor dem Zeitpunkt der Auswahl eines anderen bzw. nächsten Flächenbereiches zur Reinigung können also zeitlich nacheinander mehrfach aktuelle Zustandsdaten des aktuell ausgewählten Flächenbereiches generiert werden.

Die zu reinigenden Flächenbereiche sind insbesondere Bestandteil der Oberfläche bzw. Außenfläche der Nutzeinheit. Dies können auch Flächenbereiche im Bereich eines Radhauses oder eines Unterbodens der Nutzeinheit sein. Darüber hinaus sind auch Flächenbereiche zur Reinigung denkbar, die erst nach einem zusätzlichen Eingriff (z.B. Öffnen einer Abdeckung, eines Schutzdeckels, einer Motorhaube) zur Reinigung zugänglich und/oder sichtbar werden.

Vorzugsweise repräsentieren die bereitgestellten Vergleichsdaten einen vorbestimmten Referenz-Reinigungszustand des ausgewählten Flächenbereiches. Dieser vorbestimmte Referenz-Reinigungszustand kann als ein Soll-Reinigungszustand betrachtet werden. Vorzugsweise muss der Referenz-Reinigungszustand an dem ausgewählten Flächenbereich entweder zu 100% oder zu einem geringeren definierten Prozentsatz erreicht werden, bevor der Reinigungsvorgang an dem ausgewählten Flächenbereich beendet wird und ein anderer Flächenbereich zur Reinigung ausgewählt wird. Dies kann durch eine entsprechende Verarbeitung und Bewertung des Vergleichsergebnisses (aus dem Vergleich aktueller Zustandsdaten mit Vergleichsdaten) für den jeweiligen Anwendungsfall spezifisch und automatisiert gesteuert werden.

In einer weiteren bevorzugten Ausführungsform repräsentieren die Vergleichsdaten einen Reinigungszustand des aktuell ausgewählten Flächenbereiches während seiner Reinigung, jedoch zeitlich vor dem aktuellen Reinigungszustand. Hierdurch können für einen aktuell ausgewählten Flächenbereich während seiner Reinigung die aktuellen Zustandsdaten zweier aufeinanderfolgender Reinigungszeitpunkte miteinander verglichen werden. Dies erlaubt mit geringem datentechnischen Aufwand einen wiederholten Vergleich und eine Bewertung des jeweiligen Vergleichsergebnisses, um für den jeweiligen Anwendungsfall spezifisch und automatisiert eine Beendigung des Reinigungsvorganges für den ausgewählten Flächenbereich steuern zu können.

Vorzugsweise wird ein anderer bzw. nächster Flächenbereich zur Reinigung erst dann ausgewählt, wenn das Vergleichsergebnis höchstens so groß ist wie ein vorbestimmter Grenzwert. Mit anderen Worten wird bei dieser Bewertung des Vergleichsergebnisses der aktuell ausgewählte Flächenbereich weiter gereinigt, solange das Vergleichsergebnis den vorbestimmten Grenzwert überschreitet. Somit kann mittels des Grenzwertes verfahrenstechnisch einfach entschieden werden, ob der aktuelle Reinigungszustand des aktuell ausgewählten Flächenbereiches mit einem gewünschten Reinigungszustand hinreichend genau übereinstimmt oder noch nicht. Außerdem ermöglicht die Berücksichtigung eines Grenzwertes eine technisch einfache individuelle Justierung des Reinigungsgrades abhängig von der zu reinigenden Nutzeinheit sowie eine effiziente automatisierte Durchführung des Reinigungsvorganges.

Insbesondere repräsentiert das Vergleichsergebnis einen qualitativen und/oder quantitativen Unterschied zwischen den Vergleichsdaten und den aktuellen Zustandsdaten. Im Falle von Bilddaten kann der vorgenannte Unterschied beispielsweise eine unterschiedliche Anzahl von Pixeln oder eine unterschiedliche Farbe repräsentieren.

Anhand des vorbestimmten Grenzwertes kann anwendungsspezifisch festgelegt werden, bei welchem quantitativen und/oder qualitativen Unterschied zwischen den Vergleichsdaten und den aktuellen Zustandsdaten der Reinigungsvorgang für den aktuell ausgewählten Flächenbereich beendet werden kann und ein anderer Flächenbereich zur Reinigung ausgewählt wird.

In einer bevorzugten Ausführungsform müssen die aktuellen Zustandsdaten mit den Vergleichsdaten übereinstimmen, bevor der Reinigungsvorgang für einen Flächenbereich beendet wird. Dies kann verfahrenstechnisch einfach mit einem vorbestimmten Grenzwert gleich Null erreicht werden. Bei einer weiteren Variante wird der Reinigungsvorgang für einen Flächenbereich beendet, wenn die Abweichungen zwischen den aktuellen Zustandsdaten und den aktuellen Vergleichsdaten nur noch gering sind, also einen vorbestimmten Grenzwert größer Null nicht überschreiten.

Die Durchführung des Reinigungsvorganges wird vorzugsweise durch eine bewegliche Reinigungsdüse unterstützt, welche durch geeignete technische Mittel an jeden einzelnen zu reinigenden Flächenbereich heranbewegt wird.

Die Reinigungsdüse wird vorteilhaft dazu verwendet, mittels eines (Hoch-)Druckstrahles (nass oder trocken) den Reinigungsvorgang durchzuführen. Hierzu wird ein geeignetes Medium oder mehrere Medien verwendet. Die verwendeten Medien können flüssig (z.B. Wasser mit Reinigungsmittel) und/oder gasförmig (z.B. Luft) sein.

Vorzugsweise wird der aktuelle Reinigungszustand des ausgewählten Flächenbereiches mittels einer Sensorik erfasst. Besonders geeignet ist vorzugsweise eine optische Sensorik, z.B. mindestens eine Kamera. Die generierten aktuellen Zustandsdaten werden dann insbesondere als Bilddaten mit Vergleichsdaten verglichen.

Die Komponente "Reinigungsdüse" oder die Komponente "Sensorik" oder beide Komponenten ist bzw. sind vorzugsweise Bestandteil einer Wartungsstation. Die Wartungsstation dient als Vorrichtung für eine effiziente und automatisierte Durchführung des Reinigungsverfahrens.

Vorteilhaft werden Verfahrensschritte wie etwa der Vergleich aktueller Zustandsdaten mit Vergleichsdaten, die Auswahl eines anderen Flächenbereiches zur Reinigung und ggf. auch andere Verfahrensschritte in einer Datenverarbeitungseinheit der Wartungsstation durchgeführt. Letztere enthält vorzugsweise sämtliche für eine Datenverarbeitung erforderlichen Funktionen wie etwa einen Mikroprozessor, einen Speicher sowie geeignete Algorithmen zur Verarbeitung und Bewertung generierter Daten und ermittelter Vergleichsergebnisse sowie zur Einleitung weitere Verfahrensschritte wie etwa die Beendigung des Reinigungsvorganges an einem Flächenbereich und die Auswahl eines anderen Flächenbereiches zur Reinigung.

Für die Wartungsstation kann es vorteilhaft sein, sie teilweise (neben einem stationären Teilbereich) oder vollständig als eine mobile Wartungseinheit auszugestalten. Diese mobile Wartungseinheit kann luftgestützt (z.B. fliegende Drohne) und/oder landgestützt (z.B. beweglicher Roboterarm, fahrendes Service-Vehikel) sein. Eine zumindest teilweise mobile Wartungsstation kann unter bestimmten Rahmenbedingungen eine Reinigung der mobilen Nutzeinheit noch effizienter und ökonomischer durchführen. Dies ist beispielsweise der Fall, wenn die geometrische Ausrichtung der verschiedenen zu reinigenden Flächenbereiche verhältnismäßig stark voneinander abweicht. Vorzugsweise wird dann eine mobile Wartungseinheit (z.B. Drohne, Roboterarm) mit einer daran befestigten Reinigungsdüse entlang einer definierten dreidimensionalen Route bewegt, um die verschiedenen Flächenbereiche zur Reinigung anzusteuern.

Um die Zufuhr des Reinigungsmediums bzw. der Reinigungsmedien zu der Reinigungsdüse platzsparend und mit geringem technischen Aufwand zu realisieren, ist die Reinigungsdüse vorteilhaft an eine Reinigungsleitung angeschlossen, welche auf- und abrollbar gelagert ist. Die Reinigungsleitung dient dem Transport des Reinigungsmediums bzw. der Reinigungsmedien von einem (insbesondere stationären) Medium-Vorratsbehälter hin zur Reinigungsdüse. Die Lagerung der Reinigungsleitung erfolgt insbesondere an einer rotationsbeweglichen Lagertrommel, wie sie etwa von Elektrokabel-Trommeln her bekannt ist. Eine raumsparende effektive Arbeitslänge der Reinigungsleitung während der Reinigungsvorgänge wird vorteilhaft dadurch erzielt, dass die Rotationsbewegung der Lagertrommel durch eine Antriebseinheit (z.B. Elektromotor) in Abhängigkeit von einer erfassten Bewegung der Reinigungsdüse gesteuert wird.

Für den Fall, dass eine Wartungs-Drohne mit einer Reinigungsdüse zur Reinigung der Nutzeinheit eingesetzt wird, kann es vorteilhaft sein, mindestens eine weitere Drohne - gewissermaßen als mindestens einen weiteren Aufhängepunkt für die Reinigungsleitung - zur mechanischen Abstützung bzw. zum Tragen der Reinigungsleitung während des Reinigungsvorganges zu verwenden. Alternativ kann zum Abstützen der Reinigungsleitung ein beweglicher Roboterarm der Wartungsstation verwendet werden.

Zusätzlich kann die Wartungs-Drohne auch mit einer Energieversorgungsleitung und/oder einer Datenleitung verbunden sein. Diese Leitungen können ggf. ebenso von mindestens einer weiteren Drohne mechanisch aufgehängt bzw. abgestützt werden.

Als Alternative zu einer auf- und abrollbaren Reinigungsleitung mit einer daran angeschlossenen Reinigungsdüse ist ein Roboterarm mit einer daran angeschlossenen Reinigungsdüse denkbar. Der Roboterarm hat in diesem Fall eine Durchleitungsfunktion für das Reinigungsmedium bzw. die Reinigungsmedien von einem (insbesondere stationären) Medium-Vorratsbehälter hin zur Reinigungsdüse.

Der Medium-Vorratsbehälter ist insbesondere Bestandteil eines stationären Bereiches der Wartungsstation.

Vorteilhaft wird die verfahrensgemäße automatisierte Reinigung in Anwendungsbereichen eingesetzt, in denen spezifische Automatisierungsfunktionen zur Effizienzsteigerung besonders geeignet sind, z.B. in großen landwirtschaftlichen Betrieben oder bei einer (teil-)autonomen Fahrzeugflotte.

Vorzugsweise handelt es sich bei der mobilen Nutzeinheit um ein Nutzfahrzeug (z.B. landwirtschaftliche oder forstwirtschaftliche Maschine, Baumaschine) und/oder um ein Anbaugerät (z.B. Bodenbearbeitungsgerät, Pflug). Das Anbaugerät kann ebenfalls als eine mobile Nutzeinheit betrachtet werden, soweit es zumindest im Arbeitseinsatz beweglich ist. Insbesondere ist das Anbaugerät an das Nutzfahrzeug (z.B. Traktor) angekoppelt und hierdurch zumindest während des Arbeitseinsatzes des Nutzfahrzeugs beweglich.

Das Nutzfahrzeug ist insbesondere als ein (teil-)autonomes Fahrzeug ausgebildet. Mit den offenbarten Verfahrensschritten lässt sich eine automatisierte Handhabung des Fahrzeugs effizient unterstützen.

Das erfindungsgemäße Verfahren wird im Folgenden anhand der beigefügten Zeichnung näher erläutert.

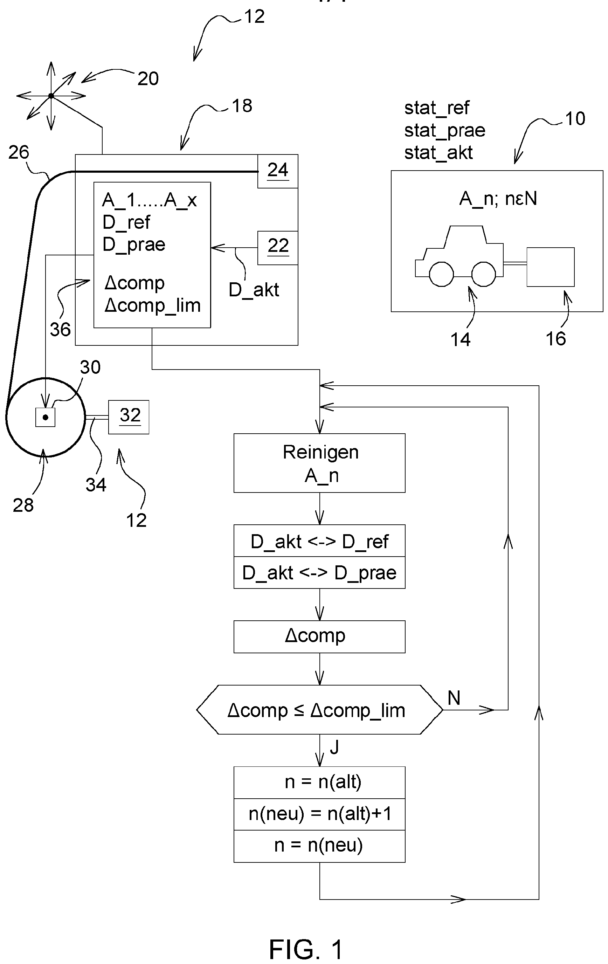

Fig. 1 zeigt schematisch eine mobile Nutzeinheit 10 und eine Wartungsstation 12. Die Wartungsstation 12 dient zur Wartung der Nutzeinheit 10, insbesondere zur Reinigung der Oberfläche der Nutzeinheit 10 von Verschmutzung und dergleichen. Verschiedene Verfahrensschritte des Verfahrens zur Reinigung der Nutzeinheit 10 sind in Fig. 1 in Form eines Flussdiagrammes dargestellt.

Die mobile Nutzeinheit 10 besteht beispielsweise aus einem Traktor 14 und/oder einem daran angekoppelten Anbaugerät 16, z.B. einem Pflug oder einem anderen Bodenbearbeitungsgerät. Die Nutzeinheit 10 wird - entweder mit einem Fahrer oder als ein (teil-)autonomes Fahrzeug ohne Fahrer - zur Wartung und/oder Reinigung, insbesondere zur Reinigung ihrer Oberfläche bzw. Außenflächen an die Wartungsstation 12 herangeführt. Die zu reinigenden Flächenbereiche sind durch das Bezugszeichen A_n symbolisiert. Je nach Anwendungsfall und Reinigungsauftrag kann eine unterschiedliche Anzahl von Flächenbereichen A_n zur Reinigung vorgesehen sein. Die Zahl n ist deshalb eine Auswahl aus den natürlichen Zahlen N = 1 bis unendlich.

Vorzugsweise enthält die Wartungsstation 12 eine mobile Wartungseinheit 18 (z.B. eine Drohne), welche relativ zur mobilen Nutzeinheit 10 gemäß einer definierten (insbesondere dreidimensionalen) Bewegungsroute bewegungsgesteuert wird, was durch die Pfeilrichtungen 20 angedeutet ist.

An der Wartungseinheit 18 sind eine Sensorik 22 (z.B. Kamera) und eine Reinigungsdüse 24 angeordnet. Mittels der Sensorik 22 wird ein aktueller Reinigungszustand stat_akt eines zur Reinigung ausgewählten Flächenbereiches A_n erfasst. Zu diesem Zweck generiert die Sensorik 22 aktuelle Zustandsdaten D_akt, welche den aktuellen Reinigungszustand stat_akt des ausgewählten Flächenbereiches A_n repräsentieren.

Die Reinigungsdüse 24 ist mit einer Reinigungsleitung 26 fluidisch verbunden, welche an einer rotierbaren Lagertrommel 28 auf- und abrollbar gelagert ist. Um die effektive Arbeitslänge der Reinigungsleitung 26 an die Bewegungen der Wartungseinheit 18 anzupassen, wird die Rotationsbewegung der Lagertrommel 28 durch eine Antriebseinheit 30 (z.B. Elektromotor) gesteuert. Die Antriebseinheit 30 wiederum wird in Abhängigkeit von einer erfassten Bewegung der Wartungseinheit 18 und somit der Reinigungsdüse 24 angesteuert.

Die Lagertrommel 28 und ein Vorratsbehälter 32 für mindestens ein Reinigungsmedium sind Bestandteile der Wartungsstation 12. Das mindestens eine Reinigungsmedium kann flüssig (z.B. Wasser mit oder ohne Reinigungsmittel) und/oder gasförmig (z.B. Luft) sein. Der Reinigungsvorgang wird vorzugsweise als Hochdruckreinigung ausgeführt. Der Vorratsbehälter 32 und die Reinigungsleitung 26 sind im Bereich der Lagertrommel 28 durch einen geeigneten fluidischen Anschluss 34 miteinander fluidisch verbunden.

Die generierten aktuellen Zustandsdaten D_akt werden einer Datenverarbeitungseinheit 36 zugeführt, welche die für eine Datenverarbeitung üblichen Bestandteile wie etwa einen Mikroprozessor, Speicher und dergleichen enthält. Die Datenverarbeitungseinheit 36 ist vorzugsweise in der Wartungseinheit 18 integriert. Vorzugsweise steuert die Datenverarbeitungseinheit 36 die Bewegungen der Wartungseinheit 18 und die Rotationsbewegungen der Antriebseinheit 30. In der Datenverarbeitungseinheit 36 sind Referenzdaten D_ref abgespeichert und bereitgestellt, welche einen vorbestimmten Referenz-Reinigungszustand stat_ref des zur Reinigung ausgewählten Flächenbereiches A_n der Nutzeinheit 10 repräsentieren. Dieser vorbestimmte Referenz-Reinigungszustand kann als ein Soll-Reinigungszustand betrachtet werden.

Die Referenzdaten D_ref wurden zeitlich vor den aktuellen Zustandsdaten D_akt generiert. Hierzu wird vorzugsweise dieselbe Sensorik 22 verwendet, welche insbesondere bei identischen spezifischen Bedingungen (z.B. Belichtung, Lichtverhältnisse, Relativposition der Sensorik 22 zum jeweiligen Flächenbereich A_n der Nutzeinheit 10) zuerst die Referenzdaten D_ref generiert und später während der Reinigung die aktuellen Zustandsdaten D_akt generiert.

In der Wartungsstation 12, insbesondere in der Datenverarbeitungseinheit 36 ist hinterlegt, welche Flächenbereiche A_n der jeweiligen Nutzeinheit 10 gereinigt werden sollen, beispielsweise die Flächenbereiche A_1 bis A_x. Zu Beginn des Reinigungsvorganges wird zunächst ein erster Flächenbereich A_n (n = 1) der Nutzeinheit 10 ausgewählt, an den die Reinigungsdüse 24 herangeführt wird. Die Reinigungsaktivität der Reinigungsdüse 24 an dem ausgewählten Flächenbereich A_n wird ggf. mehrfach unterbrochen, um mittels der Sensorik 22 aktuelle Zustandsdaten D_akt von diesem ausgewählten Flächenbereich A_n zu generieren. In der Datenverarbeitungseinheit 36 werden diese aktuellen Zustandsdaten D_akt mit den als Vergleichsdaten wirksamen Referenzdaten D_ref verglichen. Aus diesem Vergleich wird ein Vergleichsergebnis Δcomp erzielt, z.B. eine mathematische Differenz.

Ganz allgemein gibt das Vergleichsergebnis Δcomp Unterschiede (z.B. quantitativ und/oder qualitativ) zwischen den Vergleichsdaten bzw. Referenzdaten D_ref und den aktuellen Zustandsdaten D_akt wieder.

Abhängig von dem ermittelten Vergleichsergebnis Δcomp wird entschieden, ob der aktuell ausgewählte Flächenbereich A_n (n = n(alt)) weiter gereinigt werden muss oder ob ein anderer bzw. nächster Flächenbereich A_n (n = n(neu) = n(alt) + 1) zur Reinigung ausgewählt wird. Zu diesem Zweck wird das Vergleichsergebnis Δcomp in Beziehung zu einem vorbestimmten Grenzwert Δcomp_lim gesetzt. Insbesondere wird geprüft, ob das Vergleichsergebnis Δcomp höchstens so groß ist wie der vorbestimmte Grenzwert Δcomp_lim. Ist diese Bedingung erfüllt, so ist der vorbestimmte Reinigungsgrad an dem aktuell ausgewählten Flächenbereich A_n erreicht und ein anderer Flächenbereich A_n wird zur Reinigung ausgewählt. Ist die vorgenannte Bedingung nicht erfüllt, so wird der bisher ausgewählte Flächenbereich A_n weiter gereinigt und es werden wieder aktuelle Zustandsdaten D_akt generiert.

Im Zusammenhang mit dem Vergleichsergebnis Δcomp sei angemerkt, dass dieses Bezugszeichen - abhängig von der Art der Vergleichsdaten und der aktuellen Zustandsdaten D_akt (z.B. Bilddaten, Pixel, Farben) - stellvertretend für unterschiedliche Zahlenwerte und ggf. unterschiedliche physikalische Einheiten stehen kann. Analoges gilt für den vorbestimmten Grenzwert Δcomp_lim. Letzterer ist vorzugsweise an den jeweils gewünschten Reinigungsgrad der Nutzeinheit 10 qualitativ und/oder quantitativ angepasst.

In einer weiteren Ausführungsform repräsentieren die Vergleichsdaten nicht einen vorbestimmten Referenz-Reinigungszustand stat_ref, sondern einen Reinigungszustand stat_prae zeitlich vor dem aktuellen Reinigungszustand stat_akt während desselben Reinigungsvorganges für den aktuell ausgewählten Flächenbereich An. Diese Vergleichsdaten sind als überholte Zustandsdaten D_prae des aktuell ausgewählten Flächenbereiches A_n in der Datenverarbeitungseinheit 36 abgespeichert und für einen Vergleich mit den aktuellen Zustandsdaten D_akt bereitgestellt. Bei einem nächsten Vergleich bilden die zuletzt aktuellen Zustandsdaten die jüngsten überholten Zustandsdaten D_prae. Letztere werden mit neu generierten aktuellen Zustandsdaten D_akt verglichen. Auf diese Weise können während eines Reinigungsvorganges an einem ausgewählten Flächenbereich A_n ggf. zeitlich mehrmals hintereinander die jeweils jüngsten überholten Zustandsdaten D_prae mit jeweils aktuellen Zustandsdaten D_akt verglichen werden. Dieser Vergleich findet solange statt, bis das Vergleichsergebnis Δcomp höchstens so groß ist wie der vorbestimmte Grenzwert Δcomp_lim. Der Grenzwert Δcomp_lim ist vorzugsweise derart vorbestimmt, dass die Abweichung zwischen den aktuellen Zustandsdaten D_akt und den überholten Zustandsdaten D_prae verhältnismäßig gering ist und deshalb eine weitere Reinigung des aktuell ausgewählten Flächenbereiches A_n nicht effizient ist. In diesem Fall wird, wie oben erläutert, ein anderer bzw. nächster Flächenbereich A_n zur Reinigung ausgewählt.

## Patentansprüche

1. Verfahren zur Reinigung einer mobilen Nutzeinheit (10, 14, 16), wobei
- ein Flächenbereich (A_n) der Nutzeinheit (10, 14, 16) zur Reinigung ausgewählt wird,
- während der Reinigung des ausgewählten Flächenbereiches (A_n) aktuelle Zustandsdaten (D_akt) generiert werden, welche einen aktuellen Reinigungszustand (stat_akt) dieses Flächenbereiches (A_n) repräsentieren,
- die aktuellen Zustandsdaten (D_akt) mit bereitgestellten Vergleichsdaten (D_ref, D_prae) verglichen werden,
- in Abhängigkeit von einem Ergebnis des Vergleichs (Δcomp) ein anderer Flächenbereich (A_n) der Nutzeinheit (10, 14, 16) zur Reinigung ausgewählt wird.

2. Verfahren nach Anspruch 1, **dadurch gekennzeichnet, dass** die Vergleichsdaten (D_ref, D_prae)
- einen vorbestimmten Referenz-Reinigungszustand (stat_ref) des ausgewählten Flächenbereiches (A_n) repräsentieren, oder
- einen Reinigungszustand (stat_prae) des ausgewählten Flächenbereiches (A_n) während seiner Reinigung zeitlich vor dem aktuellen Reinigungszustand (stat_akt) repräsentieren.

3. Verfahren nach Anspruch 1 oder 2, **dadurch gekennzeichnet, dass** ein anderer Flächenbereich (A_n) zur Reinigung ausgewählt wird, wenn das Vergleichsergebnis (Δcomp) höchstens so groß ist wie ein vorbestimmter Grenzwert (Δcomp_lim).

4. Verfahren nach einem der vorhergehenden Ansprüche, **dadurch gekennzeichnet, dass**
- eine bewegliche Reinigungsdüse (24), und/oder
- ein flüssiges und/oder gasförmiges Medium (32) zur Reinigung verwendet wird.

5. Verfahren nach einem der vorhergehenden Ansprüche, **dadurch gekennzeichnet, dass** der aktuelle Reinigungszustand (stat_akt) des ausgewählten Flächenbereiches (A_n) mittels einer Sensorik (22) erfasst wird.

6. Verfahren nach Anspruch 4 oder 5, **dadurch gekennzeichnet, dass** die Reinigungsdüse (24) und/oder die Sensorik (22) Bestandteil einer Wartungsstation (12, 18) ist.

7. Verfahren nach Anspruch 6, **dadurch gekennzeichnet, dass** die Wartungsstation (12) eine mobile Wartungseinheit (18) enthält oder aus einer mobilen Wartungseinheit (18) besteht.

8. Verfahren nach einem der Ansprüche 4 oder 7, **dadurch gekennzeichnet, dass**
- die Reinigungsdüse (24) an eine Reinigungsleitung (26) angeschlossen ist, welche auf- und abrollbar gelagert ist, und
- das Auf- und Abrollen der Reinigungsleitung (26) in Abhängigkeit von einer Bewegung der Reinigungsdüse (24) gesteuert wird.

9. Verfahren nach einem der vorhergehenden Ansprüche, **gekennzeichnet durch** ein Nutzfahrzeug (14) und/oder ein Anbaugerät (16) als mobile Nutzeinheit (10).

10. Verfahren nach Anspruch 9, **dadurch gekennzeichnet, dass** das Nutzfahrzeug (14) ein autonomes Fahrzeug ist.

## Claims

1. Method for cleaning a mobile utility unit (10, 14, 16), wherein
- a surface area (A_n) of the utility unit (10, 14, 16) is selected for cleaning,
- during the cleaning of the selected surface area (A_n), current state data (D_akt) are generated which represent a current cleaning state (stat_akt) of this surface area (A_n),
- the current state data (D_akt) are compared with provided comparative data (D_ref, D_prae),
- depending on a result of the comparison (Δcomp), a different surface area (A_n) of the utility unit (10, 14, 16) is selected for cleaning.

2. Method according to Claim 1, **characterized in that** the comparative data (D_ref, D_prae)
- represent a predefined reference cleaning state (stat_ref) of the selected surface area (A_n), or
- represent a cleaning state (stat_prae) of the selected surface area (A_n) during its cleaning prior to the current cleaning state (stat_akt).

3. Method according to Claim 1 or 2, **characterized in that** a different surface area (A_n) is selected for cleaning if the comparison result (Δcomp) is at most as great as a predefined limit value (Δcomp_lim).

4. Method according to one of the preceding claims, **characterized in that**
- a movable cleaning jet (24), and/or
- a liquid and/or gaseous medium (32) is/are used for the cleaning.

5. Method according to one of the preceding claims, **characterized in that** the current cleaning state (stat_akt) of the selected surface area (A_n) is identified by means of a sensor system (22).

6. Method according to Claim 4 or 5, **characterized in that** the cleaning jet (24) and/or the sensor system (22) is/are part of a maintenance station (12, 18).

7. Method according to Claim 6, **characterized in that** the maintenance station (12) contains a mobile maintenance unit (18) or consists of a mobile maintenance unit (18).

8. Method according to either of Claims 4 and 7, **characterized in that**
- the cleaning jet (24) is connected to a cleaning line (26) which can be coiled and uncoiled, and
- the coiling and uncoiling of the cleaning line (26) is controlled depending on a movement of the cleaning jet (24).

9. Method according to one of the preceding claims, **characterized by** a utility vehicle (14) and/or an attachment (16) as the mobile utility unit (10).

10. Method according to Claim 9, **characterized in that** the utility vehicle (14) is an autonomous vehicle.

## Revendications

1. Procédé pour le nettoyage d'une unité d'exploitation (10, 14, 16) mobile,
- une zone de surface (A_n) de l'unité d'exploitation (10, 14, 16) étant sélectionnée pour le nettoyage,
- des données d'état actuelles (D_akt) étant générées pendant le nettoyage de la zone de surface (A_n) sélectionnée, lesquelles représentent un état de nettoyage actuel (stat_akt) de cette zone de surface (A_n),
- les données d'état actuelles (D_akt) étant comparées à des données comparatives (D_ref, D_prae) fournies,
- une autre zone de surface (A_n) de l'unité d'exploitation (10, 14, 16) étant sélectionnée pour le nettoyage en fonction d'un résultat de la comparaison (Δcomp) .

2. Procédé selon la revendication 1, **caractérisé en ce que** les données comparatives (D_ref, D_prae)
- représentent un état de nettoyage de référence (stat_ref) prédéterminé de la zone de surface (A_n) sélectionnée,
ou
- représentent un état de nettoyage (stat_prae) de la zone de surface (A_n) sélectionnée pendant son nettoyage, temporellement avant l'état de nettoyage actuel (stat_akt).

3. Procédé selon la revendication 1, **caractérisé en ce qu'**une autre zone de surface (A_n) est sélectionnée pour le nettoyage lorsque le résultat de la comparaison (Δcomp) est au moins aussi élevé qu'une valeur limite (Δcomp_lim) prédéterminée.

4. Procédé selon l'une des revendications précédentes, **caractérisé en ce que**
- une buse de nettoyage mobile (24) et/ou
- un fluide liquide et/ou gazeux (32) est utilisé pour le nettoyage.

5. Procédé selon l'une des revendications précédentes, **caractérisé en ce que** l'état de nettoyage actuel (stat_akt) de la zone de surface (A_n) sélectionnée est détecté au moyen d'un système de capteur (22).

6. Procédé selon la revendication 4 ou 5, **caractérisé en ce que** la buse de nettoyage (24) et/ou le système de capteur (22) sont des éléments constitutifs d'une station de maintenance (12, 18).

7. Procédé selon la revendication 6, **caractérisé en ce que** la station de maintenance (12) contient une unité de maintenance mobile (18) ou se compose d'une unité de maintenance mobile (18).

8. Procédé selon l'une des revendications 4 ou 7, **caractérisé en ce que**
- la buse de nettoyage (24) est raccordée à une conduite de nettoyage (26) qui est montée de manière à pouvoir être enroulée ou déroulée, et
- l'enroulement et le déroulement de la conduite de nettoyage (26) sont commandés en fonction d'un mouvement de la buse de nettoyage (24).

9. Procédé selon l'une des revendications précédentes, **caractérisé par** un véhicule utilitaire (14) et/ou un appareil rapporté (16) en tant qu'unité d'exploitation mobile (10).

10. Procédé selon la revendication 9, **caractérisé en ce que** le véhicule utilitaire (14) est un véhicule autonome.
